# EUROPEAN PATENT APPLICATION

(11) **EP 1 069 525 A1**
(43) Date of publication of application: **17.01.2001**
(21) Application number: 99830407.5
(22) Date of filing: 25.06.1999
(51) Int. Cl.: G06K 19/04, G06K 19/06

(54) **Card for optical data storage and process for manufacturing of same**

(71) Applicant: International Consulting S.r.l., 20059 Vimercate (MI) (IT)
(72) Inventor: Perego, Luciano, 20050 Mezzago (IT)
(74) Representative: Tansini, Elio Fabrizio

(57) **Abstract**

There is provided an optical card (1) comprising a first flat support (4) having a perimetral edge (4a) corresponding to the standardized rectangular shape of the card and a second flat support (5) coupled with the first support in an irremovable manner and having an outline (5a) at least partly internal to said perimetral line (4a) and adapted to form centering reliefs (5b) in a circular recess (11) of a reading unit. The process for manufacturing said card consists in preparing the two above mentioned flat supports having the required shape, on at least one of which the provided optical data is recorded, and coupling said supports with each other in an irremovable manner.

## Description

The present invention relates to a card for storage of optical data, of the type comprising the features recited in the preamble of claim 1.

The invention also relates to a new process for manufacturing a card for optical data storage.

It is known that optical memories of the type commercially known as compact discs, under the abbreviations CD ROM and DVD (Digital Versatile Disc) are usually shaped in the form of a disc, having a standardized diameter of 120 mm or 80 mm, the outer circumferential edge of which enables centering in appropriate circular recesses usually provided in extractable trays of the reading units equipped with laser heads.

Recently proposed has been use of cards of standardized form, of the type for example employed for embodying credit cards, telephone cards and the like, as a medium for optical data memories.

Embodiments of these cards are described in patent applications JP 4040586 and WO 99/00765. These known cards have a central hole, similar to that arranged in normal compact discs, to be operatively engaged by a rotation-actuating device arranged in a laser beam reading unit of the type commonly employed for compact disc reading. Formed around said central hole is the optical memory consisting of coded data recorded and distributed over an area in the form of an annulus, the outer edge of which is substantially tangent to the major sides of the card.

As in normal optical discs, a correct positioning of the card is required in the recessed housing having a diameter of 80 mm, in the extractable tray of the reading unit.

For the purpose, centering means projects from the card face intended for resting on the extractable tray being part of the reading unit, which centering means is adapted to abut against a circular edge of a recessed housing arranged in the tray itself, with an 80 mm diameter.

In a first known embodiment, the above mentioned centering means consists of two ridges in the form of an arc, of a diameter of 80 mm, extending between the major sides of the card in a concentric manner relative to said central hole.

In a second known embodiment, described in patent application WO 99/00765, the centering means consists of four reliefs projecting from the resting face of the card and disposed in pairs in two diametrical lines passing through the central hole axis at a distance corresponding to the diameter of 80 mm of said recessed housing.

The above mentioned known solutions however have some drawbacks.

Positioning of the card in the circular recess of the reading unit is not always quick and immediate. In fact the arc-shaped ridges that, on the other hand, cannot be seen during card positioning, usually require that a series of card-adaptation movements should be carried out in succession before said ridges match the edges of the circular recess along the whole extension thereof.

The reliefs of reduced sizes, in turn, can be easily subjected to breaking and deterioration which will impair operation of same.

In addition, in both the above described known solutions, for accomplishing an optical card, appropriate and complicated devices and equipment are necessary for carrying out formation of the centering ridges on the resting face of the card.

In addition, the Applicant has also wished to examine the possibility of providing a card with an optical memory having a greater storage capacity in terms of data amount.

Under this situation, the technical task underlying the present invention is to devise a card of standardized shape for optical data storage, and a process for manufacturing of same, capable of substantially obviating the mentioned drawbacks.

Within the scope of this technical task it is an important aim of the invention to devise a card for optical storage, capable of housing a memory of greater capacity.

Another important aim of the invention is to propose a card of easy and quick positioning in the circular recess of a reading unit.

A further aim of the invention is to devise a process for manufacturing a card for optical data storage only requiring simple additional equipment as compared with the equipment and devices normally already in use for manufacturing optical discs.

The technical task mentioned and the aims specified are substantially achieved by a card for optical data storage, comprising the features set forth in the characterizing part of claim 1.

The aims specified are also achieved by a process for manufacturing a card for optical data storage, characterized in that it comprises the steps set forth in claim 9.

Description of a preferred but non-exclusive embodiment of a card for optical data storage in accordance with the invention is now given hereinafter by way of non-limiting example, being illustrated in the accompanying drawings, in which:
- Fig. 1 is a perspective bottom view of the card in accordance with the invention;
- Fig. 2 is a perspective top view of a tray being part of a reading unit for compact discs into which a card in accordance with the invention can be fitted.

With reference to the drawing, a card for optical data storage in accordance with the present invention has been generally identified by reference numeral 1.

Card 1 has a central hole 2 to be operatively engaged by a conventional rotation-actuating device provided in a laser beam reading unit (not shown), of the type commonly employed for reading compact discs and/or DVD's.

Around the central hole 2 there is a region 3 defining an optical memory arranged to be read by said reading unit.

The optical memory 3 may be already provided with digital data, or arranged to receive it through an ordinary laser beam writing unit for compact discs or DVD's.

In an original manner, card 1 comprises a first flat support 4 having a substantially rectangular perimetral edge 4a corresponding to the perimetral extension of card 1, the latter having a standardized rectangular shape corresponding to the standardized shape of a credit card or a telephone card, for example.

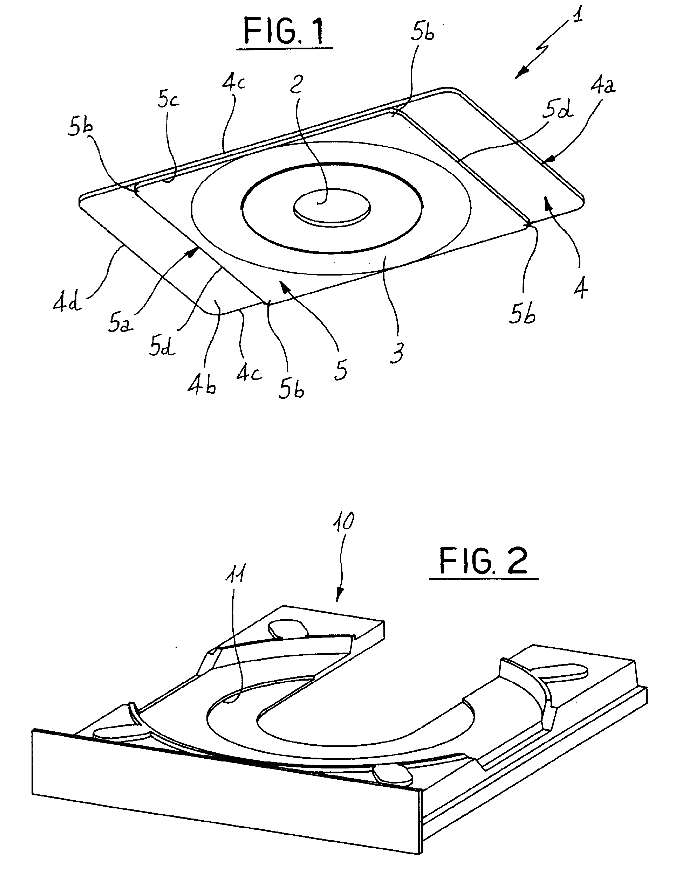

Coupled with the first flat support 4 is a second flat support 5. The second flat support 5 is fastened in an irremovable manner, by gluing for example, to a face 4b of the first support 4 intended for lying on an extractable tray 10 (Fig. 2) being part of the reading unit.

As viewed from the accompanying drawing, the second flat support 5 has an outline 5a at least partly internal relative to the extension of the perimetral edge 4a of the first support 4 so as to form, with respect to the resting face 4b, reliefs 5b adapted to define centering means for the card 1 in a housing 11 formed in the extractable tray 10 of the reading unit. This housing 11 is preferably defined by a circular recess of a diameter of 80 mm.

In the example shown, the optical memory 3 is disposed on the second support 5. Alternatively, the optical memory 3 can be disposed on the first support 4, or on both the first and second supports, 4 and 5.

In particular, the optical memory 3 can be disposed on one alone of said first and second supports 4, 5 if said optical memory is of the type arranged to be read by an ordinary reading unit for compact discs.

In a preferential embodiment however, the optical memory 3 is advantageously provided to be of the type to be read by a reading unit for DVD's. Under this situation, the optical memory may be also disposed on both the first and second supports 4, 5, which are substantially made in the form of two superposed layers glued upon each other.

Advantageously, the outline 5a of the second flat support 5, placed at a centered position relative to the first support 4, has a substantially rectangular shape of a width substantially corresponding to the extension of the first-support minor sides 4d. In more detail, the second flat support 5 has two major sides 5c substantially coinciding with the major sides 4c of said first support 4, and two minor sides 5d parallel to the minor sides 4d of said first support and symmetrically set back relative thereto.

The major sides 5c and minor sides 5d of the second support 5 are joined to each other by connection arcs 5b mutually spaced apart in pairs on the diagonal lines of the second support itself, to an extent corresponding to the diameter of the circular recess 11 of said tray 10 of the reading unit, i.e. 80 mm, so as to define said centering reliefs of the card at the four corners of the second support 5.

The invention puts into practice a new process being an integral part of the present invention as well.

It consists in arranging a first flat support 4 which has a substantially rectangular perimetral edge 4a corresponding to the perimetral extension of the card, having a standardized rectangular shape. Also arranged is a second flat support 5 having an outline 5a adapted to enable housing of same in a standardized circular recess 11 or a recess of any other type provided in an extractable tray 10 of a reading unit.

The outline 5a of the second flat support 5 must be at least partly contained internally of the extension of the perimetral edge 4a of the first support 4.

Arrangement of the first and second flat supports 4, 5 can be advantageously carried out by a first preparation step of a first and a second optical discs, using known injection moulding technologies for manufacturing optical discs, of the DVD type for example.

Then a second cutting step may be carried out, by die-cutting or milling of the first disc following a profile corresponding to the perimetral line of the first flat support 4, and of the second disc following a profile corresponding to the outline of the second flat support 5. Alternatively, the first and second supports 4, 5 can be made in the desired shape and sizes directly during the moulding step.

The optical memory 3 is formed on at least one of the flat supports 4, 5, for example by data recording directly during manufacturing of the flat support itself, or of the disc from which it is to be obtained.

The process then involves coupling of the flat supports 4, 5 with each other in an irremovable manner, by gluing for example. The second support is glued at a centered position relative to the first support 4, so that through openings formed in the supports are brought into register with each other, in order to form the central hole 2. Alternatively, the central hole 2 can be made after mutual coupling of the supports 4. 5.

Mutual junction of supports 4, 5 is also carried out in such a manner that portions of the outline 5a of the second support 5 define centering reliefs 5b emerging from the face of the first support 4 intended for resting on the extractable tray 10 of the reading unit.

The invention achieves important advantages.

In fact, first of all, the subject card lends itself to be manufactured by usual techniques employed in manufacturing DVD's. This advantageously makes it possible to associate with the card an optical memory capable of containing up to about 1 gigabyte data, thereby achieving an important increase in the storage capacity as compared with ordinary cards usually containing no more than 40 megabytes.

The centering reliefs defined by the connection arcs between the sides of the second flat support are of limited extension and enable quick and easy positioning of the card in accordance with the invention in the circular recess of the extractable tray of the reading unit.

In addition, these centering reliefs are inserted in the outline of the second support without discontinuity and therefore they are hardly subjected to breaking and damaging.

It will be finally recognized that the process for card manufacturing in accordance with the invention can be based on use of equipment and devices usually already provided for making optical discs to which very simple and widespread cutting or die-cutting apparatus are only to be added.

## Claims

1. A card for optical data storage having:
- an engagement hole (2) to be operatively engaged by rotation-actuating means being part of a reading unit,
- an optical memory (3) arranged around the engagement hole (2),
- centering means (5b) projecting from a resting face (4b) of the card and arranged to interact with a housing (11) provided in an extractable tray (10) of said reading unit for determining a given positioning of the card in the tray,
characterized in that it comprises:
- a first flat support (4) having a substantially rectangular perimetral edge (4a) corresponding to the perimetral extension of said card,
- a second flat support (5) coupled with the first support (4) in an irremovable manner, at said resting face (4b), and having an outline (5a) at least partly internal to the extension of the perimetral edge (4a) of the first support so as to form reliefs (5b) defining said centering means, said optical memory being disposed on at least one of said first and second flat supports (4), (5).

2. A card as claimed in claim 1, characterized in that said outline (5a) of the second flat support (5) has a substantially rectangular shape of a width equal to the minor sides (4d) of the first support (4) and said second support is placed at a centered position relative to the first support.

3. A card as claimed in claim 2, characterized in that said second flat support (5) has:
- two major sides (5c) substantially coincident with the major sides (4c) of said first flat support (4),
- two minor sides (5d) parallel to the minor sides (4d) of the first flat support (4) and symmetrically set back relative thereto.

4. A card as claimed in claim 3, characterized in that each centering relief (5b) is defined by a connection arc disposed along the outline (5a) of the second flat support (5), between one of said major sides (5c) and one of said minor sides (5d), said connection arcs being mutually spaced apart in opposite pairs on diagonal lines of said second support (5) to an extent corresponding to the diameter of a circular recess (11) constituting said housing present in the tray (10) of the reading unit.

5. A card as claimed in claim 1, characterized in that said first support (4) and second support (5) are integrally joined to each other by gluing.

6. A card as claimed in claim 1, characterized in that said optical memory (3) is arranged on said second flat support (5).

7. A card as claimed in claim 1, characterized in that said optical memory (3) is arranged on both said first and second flat supports (4, 5).

8. A card as claimed in claim 1, characterized in that said optical memory (3) is supplied or can be supplied with optical data to be read by a reading unit for DVD's.

9. A process for manufacturing a card for optical data storage, comprising the following steps:
- arranging a first flat support (4) having a substantially rectangular perimetral edge (4a) corresponding to the perimetral extension of said card,
- arranging a second flat support (5) having an outline (5a) adapted to be seated in a housing (11) present in an extractable tray (10) of a reading unit and suitable to be at least partly contained internally of the extension of the perimetral edge (4a) of the first support (4),
- forming an optical memory on at least one of said first and second flat supports (4, 5),
- coupling said flat supports (4, 5) with each other in an irremovable manner so that the outline portions of the second support define centering reliefs (5b) of the card (1) emerging from a face of the first support (4).

10. A process as claimed in claim 9, characterized in that arrangement of said first and second flat supports (4, 5) comprises the following steps:
- preparing a first and a second discs;
- accomplishing said optical memory on at least one of said first and second discs;
- cutting the first disc following a profile corresponding to the extension of the perimetral edge (4a) of the first flat support (4);
- cutting the second disc following a profile corresponding to the outline (5a) of the second flat support (5).
